# FASCICULE DE BREVET EUROPEEN

(11) **EP 0 872 277 B1**
(45) Date de publication et mention de la délivrance du brevet: **27.08.2003**
(21) Numéro de dépôt: 98400926.6
(22) Date de dépôt: 14.04.1998
(51) Int. Cl.: B01J 23/96, B01J 38/20, B01J 38/44, C10G 35/12

(54) **Procédé et dispositif à combustion étagée pour la régénération d'un catalyseur de reformage ou de production d'aromatiques en lit mobile**
Verfahren und stufenweise Verbrennungsvorrichtung für die Regenerierung eines Katalysators für Reformierung oder für die Herstellung von aromatische Verbindungen in Wanderbett
Process and staged combustion apparatus for regenerating a catalyst for reforming or for aromatics production in moving bed

(30) Priorité: 14.04.1997 FR 9704663
(43) Date de publication de la demande: 21.10.1998
(73) Titulaire: INSTITUT FRANCAIS DU PETROLE, 92500 Rueil Malmaison (FR)
(72) Inventeur: Brunet, François-Xavier, 69390 Vernaison (FR); Bromet, Emmanuelle, 92500 Rueil Malmason (FR); Deves, Jean-Marie, 78540 Vernouillet (FR)

(56) Documents cités:
- EP-A- 0 258 137
- EP-A- 0 378 482
- FR-A- 2 642 330
- US-A- 4 872 970
- US-A- 5 053 371

## Description

L'invention concerne les procédés en lit mobile pour la production d'hydrocarbures aromatiques, et notamment le reformage. Elle concerne plus particulièrement l'étape de combustion utilisée lors de la régénération du catalyseur usé et destinée à lui rendre ses performances catalytiques initiales.
Le catalyseur comprend généralement un support (par exemple formé d'au moins un oxyde réfractaire, le support peut également inclure une ou plusieurs zéolithes), au moins un métal noble (le platine de préférence), et de préférence au moins un métal promoteur (par exemple l'étain ou le rhénium), au moins un halogène et éventuellement un ou plusieurs éléments additionnels (tels que alcalins, alcalino-terreux, lanthanides, silicium, éléments du groupe IV B, métaux non nobles, éléments du groupe III A, etc.). Les catalyseurs de ce type contiennent, par exemple, du platine et au moins un autre métal déposés sur un support alumine chlorée. D'une manière générale, ces catalyseurs sont utilisés pour la conversion d'hydrocarbures naphténiques ou paraffiniques susceptibles de se transformer par déshydrocyclisation et/ou déshydrogénation ; dans le reformage ou pour la production d'hydrocarbures aromatiques (par exemple production de benzène, toluène, ortho-, méta- ou paraxylènes). Ces hydrocarbures proviennent du fractionnement des pétroles bruts par distillation ou d'autres procédés de transformation. Ces catalyseurs sont largement décrits dans la littérature.

Un des moyens pour augmenter les rendements de ces procédés de reformage ou de production d'aromatiques, est de diminuer les pressions opératoires auxquelles s'effectuent les différentes réactions intéressantes. Par exemple, il y a 30 ans les réactions de reformage s'effectuaient à 40 bars ; il y a 20 ans, à 15 bars. Aujourd'hui, il est courant de voir des réacteurs de reformage fonctionnant à des pressions inférieures à 10 bars, notamment comprises entre 3 et 8 bars.
L'amélioration des réactions bénéfiques due à la baisse de pression s'accompagne d'une désactivation plus rapide du catalyseur par cokage. Le coke, composé de poids moléculaire élevé et constitué essentiellement de carbone et d'hydrogène, se dépose sur les sites actifs du catalyseur. Le rapport molaire H/C du coke formé varie d'environ 0,3 à 1,0. Les atomes de carbone et d'hydrogène forment des structures poly-aromatiques condensées dont le degré d'organisation cristalline est variable en fonction de la nature du catalyseur et des conditions de fonctionnement des réacteurs. Bien que la sélectivité de transformation des hydrocarbures en coke soit très faible, les teneurs en coke accumulé sur le catalyseur peuvent être importantes. Typiquement, pour les unités à lit fixe, ces teneurs sont comprises entre 2,0 et 20,0 à 25,5 % poids. Pour les unités à lit circulant, ces teneurs sont inférieures à 10,0 % poids.
Le dépôt de coke, plus rapide à basse pression, nécessite une régénération également plus rapide du catalyseur. Les cycles de régénération actuels peuvent descendre jusqu'à 2-3 jours.

Le brevet EP-A-0.378.482 de la demanderesse expose un procédé de régénération en continu d'un catalyseur de reformage ou de production d'aromatiques, qui permet de pallier aux inconvénients inhérents à ces cycles de plus en plus courts. Une des étapes de la régénération est la combustion du coke déposé sur le catalyseur. La présente invention concerne cette étape.
Selon le brevet EP-A-0.378.482, le catalyseur usé chemine progressivement de haut en bas dans une enceinte de régénération où il rencontre successivement une première zone à lit mobile et radiale de combustion, une deuxième zone à lit mobile et radiale de combustion, une zone à lit mobile axiale d'oxychloration et une zone à lit mobile axiale de calcination, et
(a) dans la première zone de combustion, le catalyseur est traité sous une pression de 3 à 8 bars sensiblement égale à celle qui règne dans ledit premier réacteur, à une température comprise entre 350 et 450 °C par un gaz de combustion à base d'un gaz inerte circulant à co-courant du catalyseur, renfermant 0,01 à 1 % d'oxygène en volume, ce gaz de combustion provenant d'une zone de lavage des gaz issus de la calcination, de l'oxychloration et de la combustion,
(b) dans la deuxième zone de combustion, le catalyseur issu directement de la première zone de combustion est traité sous une pression de 3 à 8 bars sensiblement égale à celle qui règne dans ledit premier réacteur à une température supérieure d'au moins 20 °C à la température qui règne dans la première zone de combustion, en présence des gaz en provenance de la première zone de combustion et en présence d'un gaz inerte d'appoint auquel on ajoute jusqu'à 20 % en volume d'oxygène de façon à ce que le catalyseur soit au contact d'un gaz renfermant 0,01 à 1 % d'oxygène en volume, ces gaz circulant à co-courant du catalyseur.
Le catalyseur est ensuite envoyé dans la zone d'oxychloration.

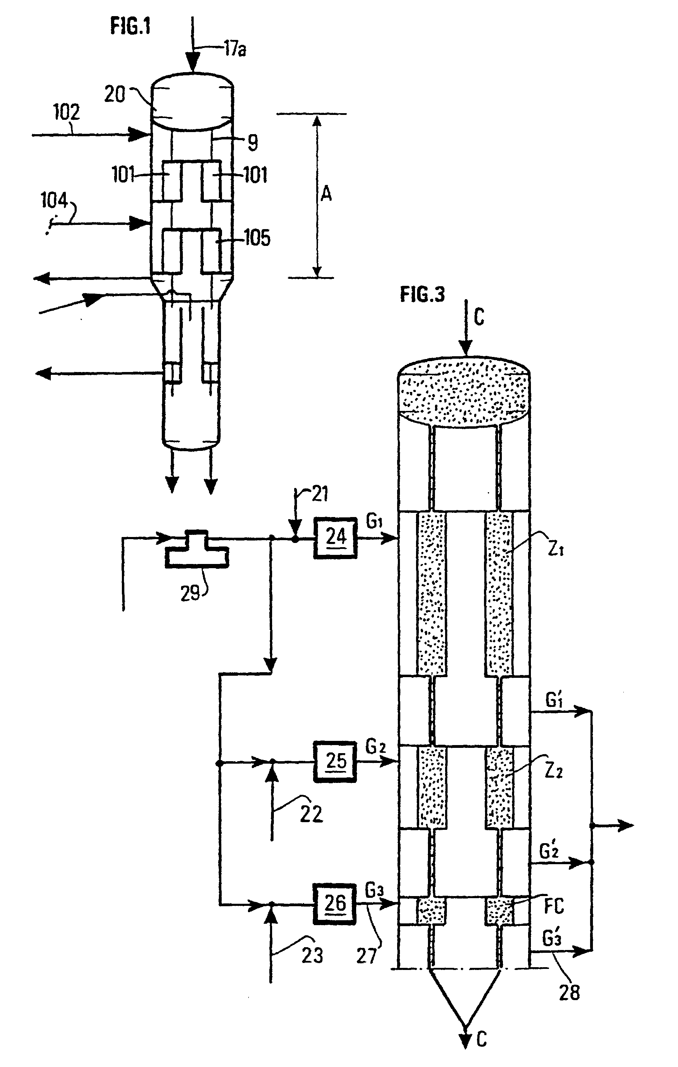

Pour présenter plus clairement l'art antérieur, on a reporté en figure 1 une figure du brevet EP -A-0.378.482 qui montre le catalyseur amené par la tubulure (17a), stocké dans la zone (20) puis passant en régénération par les tubulures (9) dans une première zone de combustion (101) puis une seconde zone de combustion (105). La combustion se déroule avec une injection (102) d'un gaz chargé en oxygène (0,01 - 1 % volume) et un apport supplémentaire (104) de gaz inerte pouvant être, si nécessaire, chargé en oxygène ou en air. L'ensemble de l'étape de combustion correspond à la partie A de la figure 1.
On peut également citer le brevet FR-A-2,642,330 qui décrit une technique proche mais dans laquelle une partie des gaz de combustion est envoyée dans la zone d'oxychloration.
Or, la demanderesse a pu constater, lors de l'exploitation de ces procédés, qu'une bonne connaissance de la combustion, et donc de son suivi et de son contrôle, étaient garants d'une bonne marche de l'unité et d'une bonne qualité de la régénération. La demanderesse a donc cherché à améliorer le contrôle de la combustion. Le procédé proposé dans la présente demande de brevet permet d'obtenir ce résultat par la gestion séparée des gaz au niveau de chaque zone, contrôlant ainsi les conditions dans chaque zone de combustion et en terminant préférentiellement la combustion par un contrôle de la fin de la combustion.

Plus précisément, l'invention concerne un procédé de régénération d'un lit mobile de catalyseur de reformage ou de production d'hydrocarbures aromatiques, ledit catalyseur renfermant un support, au moins un métal noble et au moins un halogène, procédé comprenant une étape de combustion avec traitement du catalyseur dans au moins 2 zones de combustion successives, procédé caractérisé en ce que
- chaque zone de combustion est séparée des zones de combustion adjacentes de façon à pouvoir laisser passer le catalyseur et empêcher le passage des gaz,
- dans chaque zone est introduit au moins un gaz contenant de l'oxygène à une PPH de 1-50h⁻¹, sa teneur en oxygène (volume) étant d'au plus 2%, sa température étant de 350-600°C, chaque zone ayant un volume correspondant à un temps de séjour du catalyseur de 5mn à 3h,
- un système de mesures de la température, la teneur en oxygène et du débit dudit gaz entrant dans chaque zone, de façon à contrôler et ajuster la température, la teneur en oxygène et le débit en fonction des consignes opératoires,
- la sévérité des conditions opératoires dans chaque zone s'accroît avec le sens de l'écoulement du catalyseur,
- les gaz produits sont extraits de chaque zone.

De préférence, le gaz extrait d'une zone de combustion est envoyé au moins en partie, et de préférence en totalité, dans la zone suivante (dans le sens de l'écoulement du catalyseur) avec un éventuel appoint d'oxygène (par de l'air par exemple).
Généralement, la sévérisation des conditions opératoires est obtenue en augmentant la température et/ou la teneur en oxygène du gaz entrant. De préférence, pour chaque zone la teneur en oxygène du gaz entrant est comprise entre 0,01-2 %, la température du gaz entrant est comprise entre 350-600 °C, le temps de séjour du catalyseur dans une zone est compris entre 5 min-3h et la PPH (débit massique horaire du gaz/masse de catalyseur en contact avec le gaz) est compris entre 1-50 h⁻¹ .

Avantageusement, l'étape de combustion se termine par une dernière zone dite de contrôle de la fin de la combustion dans laquelle la consommation d'oxygène est approximativement inférieure à10% de l'oxygène entrant dans ladite zone. La température est de préférence sensiblement constante.
De préférence, la zone de contrôle est située dans la partie inférieure de la dernière zone de combustion, donc après la fin du front de flamme.
De plus, il est introduit dans la zone de contrôle un gaz contenant de l'oxygène en quantité supérieure à celle des gaz entrant aux niveaux en amont (dans le sens de l'écoulement du catalyseur).

On définit ainsi dans la présente invention une combustion en plusieurs zones (ou étages), où chaque étage est caractérisé par une température régnant dans ledit étage, une température d'entrée du gaz contenant l'oxygène, une teneur en oxygène du gaz entrant, un débit de gaz et une durée d'exposition du catalyseur coké à ces conditions, afin d'avoir une combustion plus efficace.

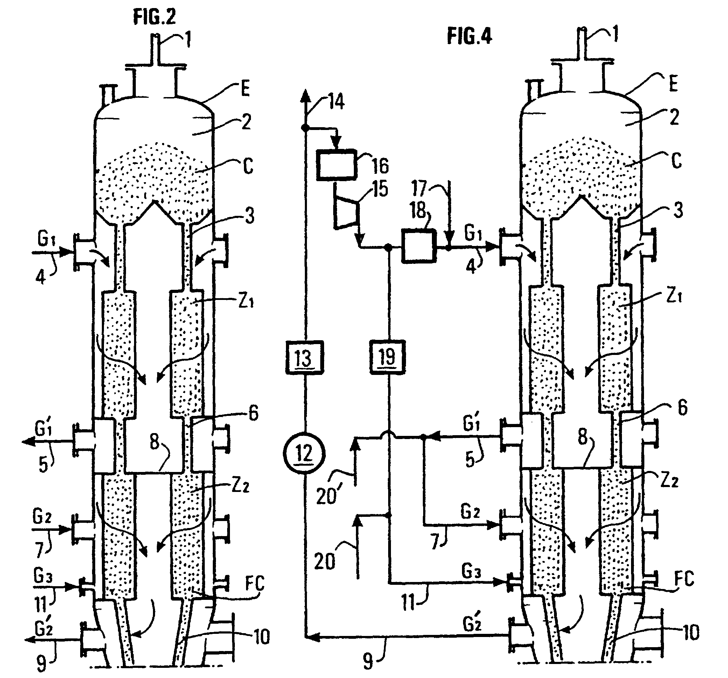

On suivra plus aisément la description de l'invention en se référant à la figure 2, que l'on pourra comparer à la figure 1 relative à l'art antérieur.
Les figures 3 et 4 montreront également des modes de réalisation de l'invention, la figure 3 une autre disposition de la zone de contrôle et la figure 4 un mode de gestion des gaz.
La figure 2 ne représente que l'étape de combustion, soit la partie A, du procédé de régénération.
De façon classique le catalyseur C usé à régénérer entre dans le sommet (2) de l'enceinte E de régénération par la conduite (1).
Le catalyseur est introduit ensuite par des conduites ou jambes (3) dans une première zone de combustion Z1. Dans cette zone le catalyseur subit un premier brûlage ou combustion à l'aide d'un gaz contenant de l'oxygène G1 introduit par la conduite (4).
De façon générale, les zones de combustion sont de type radial, et de préférence annulaire dans le cas du lit mobile montrées figure 2, le lit s'écoule alors dans l'espace annulaire délimité par deux parois cylindriques coaxiales, le gaz entrant par une paroi et sortant par l'autre.
Dans le cas du lit mobile de catalyseur, l'écoulement est continu. Des écoulements intermittents peuvent également être envisagés.

Le gaz G'1 après passage dans cette première zone de combustion est extrait de ladite zone par la conduite (5).
Le catalyseur C descend par des jambes (6) ou autres conduites dans la seconde zone de combustion Z2, dans laquelle il est introduit par une tubulure (7) un gaz G2 contenant de l'oxygène.
Selon l'invention, les zones de combustion Z1 et Z2 sont successives et adjacentes, c'est-à-dire que le catalyseur sortant de la zone de combustion Z1 passe directement dans la zone de combustion Z2, il ne subit pas de traitement entre les 2 zones. Les zones de combustion Z1 et Z2 sont physiquement séparées de façon à laisser passer le catalyseur mais en empêchant le passage des gaz, par exemple le passage des gaz G'1 vers Z2.
L'homme du métier choisira le moyen le plus adapté pour remplir cette fonction. Dans le mode de réalisation figure 2, une plaque (8) est disposée à cet effet entre les zones Z1 et Z2 sur toute la section de l'enceinte E de régénération, à l'exception des sections réservées au passage du catalyseur (jambes ou autres conduites). Certes, un peu de gaz G'1 passe dans la zone Z2 avec le catalyseur dans les jambes (6), mais c'est une mineure partie du gaz.

Le gaz G'2 après passage dans cette seconde zone de combustion est extrait de ladite zone par la conduite (9) ; plus généralement le gaz issu de la dernière zone de l'étape de combustion est soutiré de l'enceinte. Le catalyseur C descend alors dans les jambes ou autres conduites (10) vers la zone d'oxychloration non représentée ici. Il est traité après la combustion de façon connue pour assurer sa régénération (oxychloration, calcination). On notera aussi que, de façon préférée, les gaz issus de la zone d'oxychloration sont soutirés de la zone d'oxychloration pour éviter leur passage vers la dernière zone de l'étape de combustion. Ainsi aucune introduction de chlore ou composé chloré n'est réalisée dans les gaz entrant dans les zones de combustion Z1 et Z2.
On a représenté sur la figure 2, deux zones de combustion successives, le nombre de zones de combustion est choisi par l'homme du métier en fonction de l'installation à concevoir. Elles fonctionnent et sont agencées de la même façon que les zones décrites ci-dessus.

Selon un mode de réalisation avantageux, le gaz G'1 sortant de la zone Z1 est introduit au moins en partie, et de préférence en totalité, dans la zone Z2 avec le gaz G2, ou après un éventuel appoint d'oxygène pour former le gaz G2 ; cette disposition permet une utilisation maximum de l'oxygène restant et un apport d'oxygène minimum.

Cette gestion séparée des gaz au niveau de chaque zone de combustion permet de connaître précisément à tout moment les températures des gaz entrant et sortant et leurs quantités d'oxygène. Outre une utilisation maximum de l'oxygène, cette gestion permet une maîtrise de la combustion du coke par la maîtrise des conditions opératoires au niveau de chaque zone.
De façon préférée, on procède à une opération de contrôle de fin de la combustion dans une dernière zone de l'étape de combustion.

Dans la réalisation de la figure 2, cette opération est effectuée dans la partie inférieure (dans le sens de l'écoulement du catalyseur) de la dernière zone de combustion Z2, cette partie inférieure constitue alors une zone FC dite de contrôle.
Dans la réalisation représentée figure 3, la zone FC de contrôle est une zone non incluse dans la dernière zone de combustion Z2.
La zone FC de contrôle se distingue d'une zone de combustion en ce que la consommation d'oxygène est dans la zone FC approximativement inférieure à 10 % de l'oxygène entrant. Avantageusement, la température qui y règne reste sensiblement constante (variation de 3% maximum et mieux de 2 % maximum) aux erreurs de mesure près et aux déperditions thermiques près.
Il entre dans cette zone FC un gaz G3 contenant de l'oxygène par la conduite (11) selon la figure 2 (et 27 selon la figure 3), gaz qui est extrait après son passage à travers la zone FC par une conduite (9) selon la figure 2 par laquelle s'effectue également l'évacuation du gaz G'2 ayant traversé la zone de combustion Z2 ou par la conduite 28 selon la figure 3 indépendamment de G'2.

L'homme du métier choisira les moyens adaptés pour mesurer la consommation d'oxygène dans la zone FC. Par exemple, on peut mesurer la variation de la teneur en oxygène entre l'entrée et la sortie de la zone FC à partir d'une variation de la teneur à l'entrée (au même débit total de gaz) et la mesure de la variation de la teneur en sortie de zone. D'une façon générale, si le fonctionnement des étages précédents est correct, la consommation en oxygène dans la zone FC doit être faible (inférieure à 2-3 %).
Un autre moyen est de disposer de moyens de mesure de la température et/ou de la teneur en oxygène soit sur le gaz sortant (par exemple dans la figure 3 où le gaz sort indépendamment des autres gaz issus de la combustion) soit au niveau de la paroi par laquelle sort le gaz de la zone FC (cas de la figure 2 par exemple).
On peut également adapter des moyens pour mesurer la température du lit catalytique ou du catalyseur entrant et sortant de la zone de contrôle.
On dispose ainsi d'un moyen simple pour contrôler le bon fonctionnement des étages de combustion, et par la gestion indépendante des gaz de chaque étage, on peut rapidement et facilement remédier aux déficits de combustion en faisant varier la température ou le taux d'oxygène dans une ou plusieurs zones.
En effet, si la comparaison des teneurs en oxygène ou des températures sur gaz et/ou catalyseur conduit à des variations en dehors des valeurs admissibles pour le procédé (moins de 10 % pour l'oxygène et au plus 3 % pour la température) alors au moins une condition opératoire d'au moins une zone de combustion est modifiée de façon à corriger la différence. Ce peut être par modification de la teneur en oxygène et/ou de la température du gaz entrant).

Les conditions opératoires sont choisies pour chaque zone et strictement contrôlées au niveau de chaque zone (contrairement à l'art antérieur) de façon à réduire autant que possible l'effet néfaste de la combustion sur le catalyseur.
En effet, les produits formés par cette réaction exothermique sont principalement du dioxyde de carbone et de l'eau. Or, il se trouve que ce sont les conditions engendrées par cette combustion qui sont, sans conteste, les plus favorables au vieillissement ou à la dégradation du catalyseur. En particulier, la présence d'eau à haute température est responsable de l'altération progressive du support poreux du catalyseur. Typiquement, la surface spécifique d'un catalyseur neuf est proche de 250 m²/g. En fin de vie, cette valeur chute d'au moins 100 m²/g.
La qualité de la combustion est fonction de plusieurs paramètres :
- la température d'entrée du gaz contenant de l'oxygène, suffisante pour amorcer la réaction et qui accélère la vitesse de cette réaction,
- la teneur en oxygène du gaz, qui a un effet sur la montée en température dans le lit, et donc sur l'altération ou non du catalyseur ; elle favorise également la vitesse de diffusion de l'oxygène dans la particule,
- la quantité d'oxygène, qui détermine la quantité de coke que l'on va pouvoir brûler.

Dans les premières phases (ou premiers instants) de la combustion, l'oxygène apporté est théoriquement entièrement consommé, si la température du gaz et la teneur en oxygène sont suffisantes pour déclencher la réaction. Une partie du coke est à ce moment très facilement et rapidement brûlée.
La demanderesse a constaté qu'il peut rester du coke plus difficile à brûler : à la température ou les premiers pour-cent de coke sont facilement brûlés, il faut un temps très long pour éliminer les autres pour-cent.
Cette difficulté peut, selon les inventeurs, avoir plusieurs raisons, entre autres :
- présence de différents types de coke caractérisés par des températures d'amorçage différentes, des organisations cristallines différentes, des rapports H/C différents,
- localisation du coke : le coke déposé à proximité de la phase métallique du catalyseur est plus hydrogéné que le coke accumulé sur le support du catalyseur,
- problème de diffusion : le coke en surface de la particule de catalyseur brûle plus facilement que celui situé au coeur de la particule. Aux problèmes de réactivité chimique, s'ajoute un problème de diffusion de l'oxygène, vers le coke déposé au coeur du grain de catalyseur,
- la taille des amas de coke : en couche mince, il est plus rapide à brûler que s'il est sous forme de gros amas.

Ces multiples raisons impliquent de multiples espèces de coke :
- cokes à différentes températures d'amorçage : chacun est caractérisé par un seuil de température au-delà duquel la réaction peut se déclencher de manière satisfaisante et complète. Dans ce cas, on peut définir plusieurs températures opératoires.
- coke à différentes vitesses de brûlage, par exemple : coke de surface et coke de coeur. Le premier se consomme plus rapidement en défaut d'oxygène. Le second moins accessible est plus "dur" à brûler ; il constitue les derniers pour-cent de coke à éliminer, et peut être brûlé en excès d'oxygène si on considère qu'il n'y a alors plus de risques d'emballement de la réaction de combustion. Il est alors possible d'avoir une teneur plus élevée en oxygène, et une température plus haute, afin de favoriser la réaction de combustion de ce coke dur.

Au lieu d'avoir des conditions sur le gaz identiques, adaptées à un coke "moyen" comme dans l'art antérieur, la présente invention propose des conditions pour la combustion multi-étagée du coke réalisée dans les étages précédemment décrits.

Chaque étage (zone) reçoit au moins un gaz contenant de l'oxygène à
- une PPH comprise entre 1 et 50 h⁻¹, et de préférence 10-40 h⁻¹, et plus préféré 15-35 h⁻¹,
- une température T comprise entre 350 et 600 °C, de préférence 400 et 600 °C,
- une teneur en oxygène (volume), d'au plus 2 %, et de préférence 0,5-1,5 %, et généralement supérieure à 0,5 %.
- chaque zone a un volume V correspondant à un temps de séjour du catalyseur de 5 min à 3 h.

Pour chaque zone, la température d'entrée du gaz contenant de l'oxygène et la teneur en oxygène sont telles que :
- la température maximale en sortie de lit est inférieure à une valeur maximale admissible, fonction des matériaux utilisés (par exemple, 770 °C pour un acier faiblement allié),
- l'élévation maximale de température entre entrée et sortie du lit est inférieure à 200 °C de préférence de l'ordre de 100 °C,
- la température dans la zone est d'au moins 350 °C, et avantageusement d'au moins 400 °C, et inférieure à 600 °C, de préférence inférieure à 580 °C et mieux d'au plus 550 °C,
- la température dans la zone est supérieure à la température de la zone qui la précède immédiatement. Ainsi dans la zone Z2, la température T2 est supérieure à T1 de la zone Z1.
Ces températures de plus en plus élevées résultent du transfert du catalyseur chaud de la zone précédente, de l'introduction du gaz chaud contenant de l'oxygène et de la réaction exothermique de combustion qui se développe, et de la sévérité croissante des conditions opératoires.

De préférence, pour garantir le bon fonctionnement de la combustion, on introduit des gaz de plus en plus chauds au niveau des zones rencontrées lors de l'écoulement du catalyseur. Ainsi la température T2 du gaz G2 sera avantageusement supérieure à celle T1 du gaz G1, et T3 sera supérieure à T2 (T3 : température de la zone de contrôle).
Plus précisément, il entre dans la zone FC un gaz ayant une température au moins sensiblement égale à celle régnant à la fin de la combustion de la dernière zone de combustion.
- la teneur en oxygène du gaz introduit est également de plus en plus grande au niveau des zones rencontrées par le catalyseur, et la zone de contrôle correspond à la teneur en oxygène la plus forte (quantité supérieure à celle des gaz entrant aux niveaux en amont).

Un exemple de réalisation est schématisé figure 3 pour illustrer les conditions opératoires de chaque zone et la gestion des gaz.
On reconnaît l'enceinte E de régénération avec un catalyseur C en lit mobile traversant successivement les zones Z1, Z2 et FC dans lesquelles règnent des températures T1, T2 et T3.
Le volume des zones diminue avec le sens de l'écoulement du catalyseur. Les volumes V1, V2, V3 respectivement des zones Z1, Z2 et FC sont tels que V1 > V2 > V3. On a choisi des volumes différents de cette façon, mais des volumes égaux ou différents d'autres façons sont envisageables.
Un compresseur (29) fournit un débit de gaz total divisé en 3 débits alimentant les zones Z1, Z2, FC.
Sur chaque flux de gaz sont disposés un analyseur d'oxygène et une mesure de température de façon à éventuellement ajuster la teneur en oxygène et la température pour remplir les consignes.
L'apport d'oxygène est réalisé par des tubulures 21, 22, 23 respectivement sur chaque flux de gaz, et l'ajustement en température par des moyens 24, 25, 26 respectivement (fours sur la figure 3).
Il entre ainsi au niveau de chaque zone Z1, Z2, FC des gaz G1, G2, G3 respectivement dont la teneur en oxygène et la température sont en accord avec les valeurs de consigne.
Ces valeurs des gaz G1, G2, G3 sont par exemple respectivement :
T1 égale à environ 460 °C
T2 égale à environ 480 °C
T3 égale à environ 520 °C
et pour les teneurs en oxygène respectivement
01 égale à environ 0,8
02 égale à environ 0,8
03 égale à environ 1,1.
Au niveau de chaque zone, il ressort un gaz G'1, G'2, G'3 respectivement. Selon le mode de réalisation de la figure 3, les gaz sont mélangés et repris, au moins en partie par le compresseur (29) afin d'être réutilisés en combustion, ce évidemment après élimination au moins partielle de l'eau et autres espèces issues de la combustion, et après un éventuel refroidissement (par quench par exemple) si nécessaire.
Il est décrit figure 3 une disposition dans laquelle les gaz issus des zones de combustion et de finition sont mélangés, traités et recyclés vers lesdites zones comme gaz entrant.

D'une façon plus générale, les gaz extraits au niveau d'au moins 2 zones sont collectés et réintroduits, après éventuel traitement, au moins en partie dans au moins une zone de combustion après un éventuel apport d'oxygène.
De préférence, il y a recyclage vers la première zone de combustion.
Le traitement a pour but d'éliminer l'eau et les autres produits de combustion ou produits "parasites" (tel que le chlore).

Il est également intéressant de prévoir que le gaz issu de la zone FC (en mélange éventuellement avec le gaz de la dernière zone de combustion) soit réintroduit au moins en partie dans la zone FC et/ou au moins en partie dans au moins une zone de combustion, et de préférence la première zone de combustion, après évidemment un éventuel apport d'oxygène pour former le gaz entrant dans la zone, afin d'optimiser la consommation d'oxygène.

Dans ce cas, un mode de réalisation préféré pour la gestion des gaz est celui montré figure 4. On reconnaît l'enceinte selon l'invention de la figure 2 avec deux zones de combustion.
Le gaz G'2 (effluent issu de la seconde zone de combustion comprenant la zone de contrôle) est refroidi dans un échangeur (12), lavé dans un appareil (13) pour éliminer les impuretés, chlorées notamment, et une fraction de cet effluent, est purgé par la conduite (14), le reste de l'effluent est séché dans un sécheur (16), puis comprimé dans un compresseur (15) et séparé en deux fractions. L'une est envoyée comme gaz G1 dans la première zone de combustion après réchauffage (four 18) et après apport d'oxygène par un gaz (air par exemple) amené dans la conduite (17). L'autre fraction est réchauffée (four 19), additionnée d'oxygène (air par exemple) par la conduite (20) et réintroduite comme gaz G3 dans la zone de contrôle. Le gaz G'1 soutiré de la première zone de combustion est, après éventuel appoint d'oxygène par la conduite (20'), introduit dans la zone Z2.

Il est bien certain que l'invention n'est pas limitée à ce mode de réalisation, il est possible de modifier la place de certains équipements (sécheur après compresseur par exemple sur tout l'effluent de préférence), dans certains cas de réduire le nombre d'équipements (four 18 par exemple non utilisé).

L'invention concerne également une enceinte de régénération mettant en oeuvre ce procédé. Ladite enceinte comporte au moins 2 zones de combustion (Z1) et (Z2) radiales disposées en série, au moins une conduite (4,7) pour l'introduction de gaz contenant de l'oxygène dans chaque zone de combustion, au moins une conduite (1) pour l'introduction du catalyseur dans l'enceinte, au moins une conduite (3,6), pour le transfert du catalyseur entre les zones, et au moins une conduite (10) pour le transfert du catalyseur dans une zone suivante d'oxychloration, et au moins une conduite (9) pour l'évacuation des gaz issus de la combustion en dehors de l'enceinte, ladite conduite (9) étant située avant la zone d'oxychloration, enceinte caractérisée en ce que
- entre les zones de combustion sont disposés des moyens de séparation permettant le passage du catalyseur entre lesdites zones dans les conduites à cet effet mais empêchant le passage des gaz entre lesdites zones,
- et au moins une conduite (5,9) est disposée au niveau de chaque zone pour extraire les gaz issus du passage à travers ladite zone,
- et sur les conduites (4, 7) pour l'introduction de gaz contenant de l'oxygène dans chaque zone de combustion sont placés au moins une conduite pour faire un apport d'oxygène et un système de mesure de la température, de la teneur en oxygène et du débit de façon à contrôler et ajuster le température, la teneur en oxygène et le débit en fonction des consignes opératoires.
Selon un mode de réalisation préféré (figure 2), la dernière zone de combustion (Z2) comporte dans sa partie inférieure une zone (FC) dite de contrôle de la fin de la combustion, munie d'au moins une conduite (11) pour introduire au moins un gaz contenant de l'oxygène et au moins une conduite (9) pour extraire les gaz issus du passage à travers la zone de combustion (Z2) et la zone de contrôle (FC).

Selon un autre mode préféré de réalisation (figure 3), la dernière zone de combustion (Z2) est suivie d'une zone dite de contrôle (FC), telle que entre les 2 zones est disposé un moyen de séparation permettant le passage du catalyseur mais empêchant le passage des gaz, ladite zone de contrôle étant munie d'une conduite (27) pour l'introduction d'un gaz contenant de l'oxygène et d'une conduite (28) pour l'évacuation du gaz.

De préférence, au moins une conduite (5) d'évacuation des gaz d'une zone de combustion est reliée à au moins une conduite (7) d'introduction du gaz contenant de l'oxygène dans une zone qui la suit.

Avantageusement, la conduite (28, 9) d'évacuation du gaz issu de la zone de contrôle (FC) est reliée à la conduite (4) pour l'introduction du gaz contenant de l'oxygène dans la première zone de combustion (Z1) de façon à recycler une partie au moins du gaz issu de la zone (FC) vers la zone (Z1).

Pour réaliser le contrôle des conditions opératoires dans chaque zone, sur les conduites (4, 7) pour l'introduction dans l'enceinte de gaz contenant de l'oxygène dans chaque zone sont placés au moins une conduite pour faire un appoint d'oxygène, éventuellement au moins un moyen pour réchauffer le gaz, et un système de mesures de la température, de la teneur en oxygène et du débit de façon à contrôler et ajuster la température, la teneur en oxygène et le débit en fonction des consignes opératoires.

## Revendications

1. Procédé de régénération d'un lit mobile de catalyseur de reformage ou de production d'hydrocarbures aromatiques, ledit catalyseur renfermant un support, au moins un métal noble et au moins un halogène, procédé comprenant une étape de combustion avec traitement du catalyseur dans au moins 2 zones de combustion successives, procédé **caractérisé en ce que**
- chaque zone de combustion est séparée des zones de combustion adjacentes de façon à pouvoir laisser passer le catalyseur et empêcher le passage des gaz,
- dans chaque zone est introduit au moins un gaz contenant de l'oxygène à une PPH de 1-50h⁻¹, sa teneur en oxygène (volume) étant d'au plus 2%, sa température étant de 350-600°C, chaque zone ayant un volume correspondant à un temps de séjour du catalyseur de 5mn à 3h,
- un système de mesures de la température, la teneur en oxygène et du débit dudit gaz entrant dans chaque zone, de façon à contrôler et ajuster la température, la teneur en oxygène et le débit en fonction des consignes opératoires,
- la sévérité des conditions opératoires dans chaque zone s'accroît avec le sens de l'écoulement du catalyseur,
- les gaz produits sont extraits de chaque zone.

2. Procédé selon la revendication 1, dans lequel chaque zone reçoit au moins un gaz contenant de l'oxygène, la teneur en oxygène (volume) étant d'au plus 2%, la température de 400-600°C, le temps de séjour du catalyseur de 5mn à 3h et le débit massique horaire du gaz/masse de catalyseur en contact avec le gaz (PPH) de 1-50h⁻¹.

3. Procédé l'une des revendications précédentes, dans lequel le gaz extrait d'une zone de combustion est envoyé au moins en partie dans la zone suivante (dans le sens de l'écoulement du catalyseur) avec un éventuel appoint d'oxygène.

4. Procédé selon l'une des revendications précédentes, dans lequel le gaz extrait d'une zone est envoyé en totalité dans la zone suivante avec un éventuel apport d'oxygène .

5. Procédé selon l'une des revendications précédentes, dans lequel la sévérisation des conditions opératoires est obtenue en augmentant la température et/ou la teneur en oxygène du gaz entrant.

6. Procédé selon l'une des revendications précédentes, dans lequel l'étape de combustion se termine dans une dernière zone dite de contrôle de fin de la combustion dans laquelle la consommation d'oxygène est approximativement inférieure à 10 % de l'oxygène entrant dans ladite zone, la quantité d'oxygène entrant dans ladite zone étant supérieure à celle des gaz entrant aux niveaux en amont (dans le sens de l'écoulement du catalyseur).

7. Procédé selon la revendication 6, dans lequel la température est sensiblement constante dans la zone de contrôle:

8. Procédé selon l'une des revendications 6 à 7, dans lequel la zone de contrôle est située dans la partie inférieure de la dernière zone de combustion.

9. Procédé selon l'une des revendications 6 à 8, dans lequel le gaz issu de la zone de contrôle est réintroduit au moins en partie dans la première zone de combustion.

10. Procédé selon l'une des revendications 6 à 9, dans lequel le gaz issu de la zone de contrôle est réintroduit au moins en partie dans la zone de contrôle.

11. Procédé selon l'une des revendications précédentes, dans lequel les gaz extraits au niveau d'au moins 2 zones sont collectés et réintroduits au moins en partie dans au moins une zone de combustion après un éventuel apport d'oxygène.

12. Procédé selon l'une des revendications précédentes comprenant une étape de combustion avec traitement du catalyseur dans une première zone de combustion puis une seconde zone de combustion, les zones sont séparées de façon à laisser passer le catalyseur et empêcher le passage des gaz, la seconde zone de combustion comportant dans sa partie inférieure une zone de contrôle de la fin de la combustion, et l'effluent extrait de la première zone de combustion est envoyé en totalité dans la seconde zone de combustion après appoint d'oxygène, que, l'effluent issu de la seconde zone de combustion est refroidi, traité pour éliminer les impuretés, purgé, séché, comprimé puis séparé en deux fractions, l'une étant introduite après réchauffage et après apport d'oxygène, dans la première zone de combustion et l'autre étant réchauffée, additionnée d'oxygène et introduite dans la zone de contrôle.

13. Procédé selon l'une des revendications précédentes dans lequel les impuretés chlorées ont été éliminées dans les gaz entrant dans les zones de combustion.

14. Procédé selon l'une des revendications précédentes **caractérisé en ce que** sont mesurées les températures et teneur en oxygène des gaz sortant de chaque zone.

15. Procédé selon l'une des revendications précédentes **caractérisé en ce que** pour chaque zone les température et teneur en oxygène du gaz entrant contenant de l'oxygène sont telles que :
- la température maximale en sortie de lit est inférieure à une valeur maximale admissible fonction du matériau,
- - l'élévation maximale de température entre l'entrée et la sortie du lit est inférieure à 200°C,
- la température dans la zone est d'au moins 350°C et inférieure à 600°C, la température dans la zone est inférieure à la température de la zone qui la précède immédiatement.

16. Procédé selon la revendication 15 dans lequel la température dans la zone est d'au moins 400°C et inférieure à 600°C.

17. Procédé selon l'une des revendications précédentes **caractérisé en ce que** l'élévation maximale de température entre l'entrée et la sortie du lit est inférieure à 100°C.

18. Enceinte pour la régénération de catalyseur de reformage ou de production d'aromatiques renfermant un support, au moins un métal noble et au moins un halogène, le catalyseur étant sous forme de lit mobile, ladite enceinte comportant au moins 2 zones de combustion (Z1) et (Z2) radiales disposées en série, au moins une conduite (4,7) pour l'introduction de gaz contenant de l'oxygène dans chaque zone de combustion, au moins une conduite (1) pour l'introduction du catalyseur dans l'enceinte, au moins une conduite (3,6), pour le transfert du catalyseur entre les zones, et au moins une conduite (10) pour le transfert du catalyseur dans une zone suivante d'oxychloration, et au moins une conduite (9) pour l'évacuation des gaz issus de la combustion en dehors de l'enceinte, ladite conduite (9) étant située avant la zone d'oxychloration, enceinte **caractérisée en ce que**
- entre les zones de combustion sont disposés des moyens de séparation permettant le passage du catalyseur entre lesdites zones dans les conduites à cet effet mais empêchant le passage des gaz entre lesdites zones,
- au moins une conduite (5,9) est disposée au niveau de chaque zone de combustion pour extraire les gaz issus du passage à travers ladite zone,
- et sur les conduites (4, 7) pour l'introduction de gaz contenant de l'oxygène dans chaque zone de combustion sont placés au moins une conduite pour faire un apport d'oxygène et un système de mesure de la température, de la teneur en oxygène et du débit de façon à contrôler et ajuster le température, la teneur en oxygène et le débit en fonction des consignes opératoires.

19. Enceinte selon la revendication 18, dans laquelle pour les consignes opératoires, la température du gaz contenant de l'oxygène est de 400-600°C et celle dans la zone est d'au moins 400°C et inférieure à 600°C.

20. Enceinte selon l'une des revendications 18 à 19, **caractérisée en ce que** la dernière zone de combustion (Z2) comporte dans sa partie inférieure une zone (FC), dite de contrôle de la fin de la combustion, munie d'au moins une conduite (11) pour introduire au moins un gaz contenant de l'oxygène et au moins une conduite (9) pour extraire les gaz issus du passage à travers la zone de combustion (Z2) et la zone de contrôle (FC).

21. Enceinte selon l'une des revendications 18 à 20, **caractérisée en ce que** la dernière zone de combustion (Z2) est suivie d'une zone dite de contrôle(FC), telle que entre les 2 zones est disposé un moyen de séparation permettant le passage du catalyseur mais empêchant le passage des gaz, ladite zone de contrôle étant munie d'une conduite (27) pour l'introduction d'un gaz contenant de l'oxygène et d'une conduite (28) pour l'évacuation du gaz.

22. Enceinte selon l'une des revendications 18 à 21, **caractérisée en ce que** au moins une conduite (5) d'évacuation des gaz d'une zone de combustion est reliée à au moins une conduite (7) d'introduction du gaz contenant de l'oxygène dans une zone qui la suit.

23. Enceinte selon l'une des revendications 18 à 22, **caractérisée en ce que** la conduite (28, 9) d'évacuation du gaz issu de la zone de contrôle (FC) est reliée à la conduite (4) pour l'introduction du gaz contenant de l'oxygène dans la première zone de combustion (Z1) de façon à recycler une partie au moins du gaz issu de la zone (FC) vers la zone (Z1).

## Patentansprüche

1. Verfahren zur Regenerierung eines beweglichen Katalysatorbetts zur Reformierung oder zur Erzeugung aromatischer Kohlenwasserstoffe, wobei dieser Katalysator einen Träger, wenigstens ein Edelmetall und wenigstens ein Halogen einschließt, Verfahren, eine Verbrennungsstufe mit Behandlung des Katalysators in wenigstens 2 aufeinanderfolgenden Verbrennungszonen umfassend, Verfahren, **dadurch gekennzeichnet, dass**
a. jede Verbrennungszone von den benachbarten Verbrennungszonen derart getrennt ist, dass man den Katalysator passieren lassen und den Durchgang der Gase verhindern kann,
b. in jede Zone wenigstens ein Sauerstoff enthaltendes Gas bei einer PPH von 1-50h⁻¹ eingeführt wird, wobei dessen Sauerstoffgehalt (Volumen) bei höchstens 2 % und seine Temperatur bei 350-600°C liegt und jede Zone über ein Volumen entsprechend einer Verweilzeit des Katalysators von 5 Minuten bis 3 Stunden verfügt,
c. ein System zur Messung der Temperatur, des Gehaltes an Sauerstoff und des Durchsatzes des in jede Zone eintretenden Gases, derart, dass die Temperatur, der Gehalt an Sauerstoff und der Durchsatz als Funktion der Betriebssollwerte geregelt und eingestellt wird,
d. die verschärften Arbeitsbedingungen in jeder Zone mit der Strömungsrichtung des Katalysators zunehmen und
e. die erzeugten Gase aus jeder Zone abgezogen werden.

2. Verfahren nach Anspruch 1, bei dem jede Zone wenigstens ein Sauerstoff enthaltendes Gas aufnimmt, wobei der Sauerstoffgehalt (Volumen) bei höchstens 2 %, die Temperatur bei 400-600°C, die Verweilzeit des Katalysators bei 5 Minuten bis 3 Stunden und der spezifische stündliche Durchsatz von Gas/(mit dem Gas in Kontakt stehender Katalysatormasse) (PPH) bei 1-50h⁻¹ liegt.

3. Verfahren nach einem der vorhergehenden Ansprüche, bei dem das aus einer Verbrennungszone extrahierte Gas wenigstens zum Teil in die folgende Zone (in Strömungsrichtung des Katalysators gesehen) mit einem eventuellen Sauerstoffzusatz gegeben wird.

4. Verfahren nach einem der vorhergehenden Ansprüche, bei dem das aus einer Zone extrahierte Gas insgesamt in die folgende Zone, gegebenenfalls unter Zusatz von Sauerstoff, gegeben wird.

5. Verfahren nach einem der vorhergehenden Ansprüche, bei dem die verschärften Arbeitsbedingungen erhalten werden, indem man die Temperatur und/oder den Gehalt an Sauerstoff des eintretenden Gases erhöht.

6. Verfahren nach einem der vorhergehenden Ansprüche, bei dem die Verbrennungsstufe in einer letzten Zone endet, der sog. Regelung des Verbrennungsendes, in der der Sauerstoffverbrauch in etwa niedriger als 10 % Sauerstoff bei Eintritt in diese Zone liegt und die Menge an in diese Zone eintretendem Sauerstoff größer als die der eintretenden Gase auf anströmseitigen Niveaus (in Strömungsrichtung des Katalysators gesehen) liegt.

7. Verfahren nach Anspruch 6, bei dem die Temperatur im wesentlichen in der Regelzone konstant ist.

8. Verfahren nach einem der Ansprüche 6 bis 7, bei dem sich die Regelzone im unteren Teil der letzten Verbrennungszone befindet.

9. Verfahren nach einem der Ansprüche 6 bis 8, bei dem das aus der Regelzone stammende Gas wenigstens zum Teil in die erste Verbrennungszone wieder eingeführt wird.

10. Verfahren nach einem der Ansprüche 6 bis 9, bei dem das aus der Regelzone stammende Gas wenigstens zum Teil in die Regelzone wieder eingeführt wird.

11. Verfahren nach einem der vorhergehenden Ansprüche, bei dem die in Höhe wenigstens zweier Zonen extrahierten Gase gesammelt und wenigstens zum Teil in wenigstens eine Verbrennungszone hinter einem eventuellen Sauerstoffzusatz eingeführt werden.

12. Verfahren nach einem der vorhergehenden Ansprüche, eine Stufe der Verbrennung unter Behandlung des Katalysators in einer ersten Verbrennungszone, dann einer zweiten Verbrennungszone umfassend, wobei die Zonen derart getrennt sind, dass der Katalysator durchgehen kann und der Durchgang der Gase verhindert wird, wobei die zweite Verbrennungszone in ihrem unteren Teil über eine Regelzone für das Ende der Verbrennung verfügt und der aus der ersten Verbrennungszone extrahierte Abstrom insgesamt in die zweite Verbrennungszone nach Sauerstoffzusatz geliefert wird, der, nachdem der aus der zweiten Verbrennungszone stammende Abstrom gekühlt wurde, zur Eliminierung der Verunreinigungen behandelt, gereinigt, getrocknet, komprimiert, dann in zwei Fraktionen getrennt wird, von denen die eine nach der Erwärmung und die andere nach Sauerstoffzusatz in die erste Verbrennungszone wieder eingeführt wird und die andere erneut erwärmt wird, Sauerstoff zugegeben und in die zweite Regelzone eingeführt wird.

13. Verfahren nach einem der vorhergehenden Ansprüche, bei dem die chlorierten Verunreinigungen in den in die Verbrennungszonen eintretenden Gase eliminiert werden.

14. Verfahren nach einem der vorhergehenden Ansprüche, **dadurch gekennzeichnet, dass** die Temperaturen und der Sauerstoffgehalt der aus jeder Zone austretenden Gase gemessen werden.

15. Verfahren nach einem der vorhergehenden Ansprüche, **dadurch gekennzeichnet, dass** für jede Zone die Temperaturen und der Sauerstoffgehalt der eintretenden Sauerstoff enthaltenden Gase derart sind, dass:
a. die Maximaltemperatur am Austritt des Bettes geringer als ein als Funktion des Materials zulässiger Maximalwert ist,
b. die maximale Temperaturerhöhung zwischen Eintritt und Austritt des Bettes niedriger als 200°C liegt und
c. die Temperatur in der Zone bei wenigstens 350°C und weniger als 600°C liegt, wobei die Temperatur in der Zone geringer als die Temperatur der unmittelbar vorhergehenden Zone ist.

16. Verfahren nach Anspruch 15, bei dem die Temperatur in der Zone wenigstens 400°C und niedriger als 600°C ist.

17. Verfahren nach einem der vorhergehenden Ansprüche, **dadurch gekennzeichnet, dass** die maximale Erhöhung der Temperatur zwischen Eintritt und Austritt des Bettes geringer als 100°C ist.

18. Gefäß für die Regenerierung von Katalysatoren zum Reformieren oder zur Erzeugung von Aromaten einschließlich eines Trägers, wenigstens eines Edelmetalls und wenigstens eines Halogens, wobei der Katalysator in Form eines beweglichen Bettes vorliegt, das Gefäß wenigstens zwei Verbrennungszonen (Z1) und (Z2), die radial und in Reihe angeordnet sind, umfasst, wenigstens eine Leitung (4, 7) zum Einführen von Sauerstoff enthaltendem Gas in jede Verbrennungszone, wenigstens eine Leitung (1) zum Einführen des Katalysators in das Gefäß, wenigstens eine Leitung (3, 6) für die Überführung des Katalysators zwischen den Zonen und wenigstens eine Leitung (10) für die Überführung des Katalysators in eine folgende Oxychlorierungszone und wenigstens eine Leitung (9) zum Abziehen der aus der Verbrennungszone außerhalb des Gefäßes stammenden Gase, wobei diese Leitung sich vor der Oxychlorierungszone befindet, Gefäß, **dadurch gekennzeichnet, dass**
a. zwischen den Verbrennungszonen Trennmittel angeordnet sind, die den Durchgang des Katalysators zwischen diesen Zonen in die Leitungen hierzu ermöglichen, jedoch den Durchgang der Gase zwischen diesen Zonen verhindern,
b. wenigstens eine Leitung (5, 9) ist in Höhe jeder Verbrennungszone angeordnet, um die aus dem Durchgang durch diese Zone stammenden Gase zu extrahieren,
c. und an den Leitungen (4, 7) zum Einführen von Sauerstoff enthaltenden Gasen in diese Verbrennungszone wenigstens eine Leitung angeordnet ist, um einen Sauerstoffzusatz herbeizuführen und ein Temperaturmeßsystem für den Gehalt an Sauerstoff und den Durchsatz, derart, dass die Temperatur, der Sauerstoffgehalt und der Durchsatz als Funktion der Betriebssollwerte geregelt und eingestellt werden.

19. Gefäß nach Anspruch 18, bei dem für die Betriebssollwerte die Temperatur des Sauerstoff enthaltenden Gases bei 400-600°C und die in der Zone bei wenigstens 400°C und unter 600°C liegt.

20. Gefäß nach Anspruch 18 bis 19, **dadurch gekennzeichnet, dass** die letzte Verbrennungszone (Z2) in ihrem unteren Teil eine Zone (FC), die sogenannte Regelzone für das Ende der Verbrennung, versehen mit wenigstens einer Leitung (11) zum Einführen wenigstens eines Sauerstoff enthaltenden Gases und wenigstens eine Leitung (9) umfasst, um die aus dem Durchgang durch die Verbrennungszone (Z2) und die Regelzone (FC) stammenden Gase zu extrahieren.

21. Gefäß nach einem der Ansprüche 18 bis 20, **dadurch gekennzeichnet, dass** die letzte Verbrennungszone (Z2) einer Regelzone (FC) derart folgt, dass zwischen den beiden Zonen ein Trennmittel angeordnet ist, welches den Durchgang des Katalysators ermöglicht, den Durchlass der Gase jedoch verhindert, wobei die Regelzone mit einer Leitung (27) zum Einführen eines Sauerstoff enthaltenden Gases und einer Leitung (28) zum Abziehen des Gases versehen ist.

22. Gefäß nach einem der Ansprüche 18 bis 21, **dadurch gekennzeichnet, dass** wenigstens eine Leitung (5) zum Abzug der Gase aus einer Verbrennungszone mit wenigstens einer Leitung (7) zum Einführen des Sauerstoff enthaltenden Gases in eine ihr folgende Zone verbunden ist.

23. Gefäß nach einem der Ansprüche 18 bis 22, **dadurch gekennzeichnet, dass** die Leitung (28, 9) zum Abzug des aus der Regelzone (FC) stammenden Gases mit der Leitung (4) zum Einführen des Sauerstoff enthaltenden Gases in die erste Verbrennungszone (Z1) derart verbunden ist, dass wenigstens ein Teil des aus der Zone (FC) stammenden Gases in die Zone (Z1) rezykliert wird.

## Claims

1. A process for regenerating a moving bed of catalyst for reforming or for aromatic hydrocarbon production, said catalyst comprising a support, at least one noble metal and at least one halogen, the process comprising a combustion step treating the catalyst in at least two successive combustion zones, the process being **characterized in that**:
• each combustion zone is separated from the adjacent combustion zones so as to allow catalyst to pass and to prevent the passage of gas;
• at least one oxygen-containing gas is introduced into each zone, at a WHSV of 1-50 h⁻¹, its oxygen content (by volume) being at most 2%, its temperature being 350-600°C, each zone having a volume corresponding to a residence time for the catalyst of 5 minutes to 3 hours;
• a system for measuring the temperature, the oxygen content and the flow rate of said gas entering each zone is provided, in order to monitor and control the temperature, the oxygen content and the flow rate as a function of the operating specifications;
• the severity of the operating conditions in each zone increases in the direction of catalyst flow;
• the gases produced are extracted from each zone.

2. A process according to claim 1, in which each zone receives at least one oxygen-containing gas, the oxygen content (by volume) being at most 2%, the temperature being 400-600°C, the residence time for the catalyst being from 5 minutes to 3 hours and the hourly mass flow rate of the gas/mass of catalyst in contact with the gas (WHSV) being 1-50 h⁻¹.

3. A process according to one of the preceding claims, in which at least a portion of the gas extracted from one combustion zone is sent to the next zone (in the direction of catalyst flow) with possible oxygen makeup.

4. A process according to one of the preceding claims, in which all of the gas extracted from one zone is sent to the next zone, with possible oxygen makeup.

5. A process according to one of the preceding claims, in which the operating conditions are rendered more severe by increasing the temperature and/or the oxygen content of the incoming gas.

6. A process according to one of the preceding claims, in which the combustion step ends with a final zone for controlling and monitoring the end of combustion, in which the oxygen consumption is approximately less than 10% of the oxygen entering said zone, the quantity of oxygen entering said zone being higher than that of the gas entering the upstream levels (in the direction of catalyst flow).

7. A process according to claim 6, in which the temperature is substantially constant in the control and monitoring zone.

8. A process according to claim 6 or claim 7, in which the control and monitoring zone is located in the lower portion of the final combustion zone.

9. A process according to one of claims 6 to 8, in which at least a portion of the gas from the control and monitoring zone is re-introduced into the first combustion zone.

10. A process according to one of claims 6 to 9, in which at least a portion of the gas from the control and monitoring zone is re-introduced into the control and monitoring zone.

11. A process according to any one of the preceding claims, in which at least a portion of the gases extracted from at least two zones are collected and re-introduced into at least one combustion zone after optional oxygen makeup.

12. A process according to any one of the preceding claims, comprising a combustion step treating the catalyst in a first combustion zone then in a second combustion zone, the zones being separate in order to allow catalyst to pass and to prevent the passage of gas, the lower portion of the second combustion zone comprising a combustion completion monitoring and control zone, and all of the effluent extracted from the first combustion zone is sent to the second combustion zone after makeup with oxygen, the effluent from the second combustion zone being cooled, treated to eliminate impurities, purged, dried, compressed then separated into two fractions, one fraction, after re-heating and after makeup with oxygen, being introduced into the first combustion zone and the other fraction being re-heated, made up with oxygen and introduced into the monitoring and control zone.

13. A process according to one of the preceding claims, in which chlorine-containing impurities are eliminated from the gas entering the combustion zones.

14. A process according to one of the preceding claims, **characterized in that** the temperature and oxygen content of the gas leaving each zone are measured.

15. A process according to one of the preceding claims, **characterized in that** for each zone the temperature and oxygen content of the incoming oxygen-containing gas are such that:
• the maximum temperature at the bed outlet is lower than a maximum admissible value that is a function of the material;
• the maximum temperature rise between the bed inlet and outlet is less than 200°C;
• the temperature in the zone is at least 350°C and less than 600°C, the temperature in said zone being lower than the temperature of the immediately preceding zone.

16. A process according to claim 15, in which the temperature in said zone is at least 400°C and less than 600°C.

17. A process according to one of the preceding claims, **characterized in that** the maximum temperature rise between the bed inlet and outlet is less than 100°C.

18. A vessel for regenerating a reforming or aromatic compound production catalyst, comprising a support, at least one noble metal and at least one halogen, the catalyst being in the form of a moving bed, said vessel comprising at least two radial combustion zones (Z1) and (Z2) disposed in series, at least one conduit (4, 7) for introducing oxygen-containing gas into each combustion zone, at least one conduit (1) for introducing catalyst into the vessel, at least one conduit (3, 6) for transferring catalyst between the zones, at least one conduit (10) for transferring catalyst into the following oxychlorination zone, and at least one conduit (9) for evacuating gas from the combustion zone out of the vessel, said conduit (9) being located before the oxychlorination zone, the vessel being **characterized in that**:
• separation means are disposed between the combustion zones to allow the passage of catalyst between said zones in the conduits for this purpose but to prevent the passage of gases between said zones;
• at least one conduit (5, 9) is disposed in each zone to extract the gases after passing through said zone;
• and at least one conduit for oxygen makeup and a system for measuring temperature, oxygen content and flow rate are placed in the conduits (4, 7) for introducing oxygen-containing gas into each combustion zone, to monitor and adjust the temperature, oxygen content and flow rate as a function of the operating specifications.

19. A vessel according to claim 18, in which the operating specifications are as follows: the temperature of the oxygen-containing gas is 400-600°C and that in the zone is at least 400°C and less than 600°C.

20. A vessel according to claim 18 or claim 19, **characterized in that** the lower portion of the last combustion zone (Z2) comprises a combustion completion monitoring and control zone (FC), zone (FC) being provided with at least one conduit (11) for introducing at least one oxygen-containing gas and at least one conduit (9) for extracting gases after passage through the combustion zone (Z2) and the monitoring and control zone (FC).

21. A vessel according to one of claims 18 to 20, **characterized in that** the last combustion zone (Z2) is followed by a monitoring and control zone (FC) such that a separation means is disposed between the two zones to allow catalyst to pass but to prevent the passage of gas, said monitoring and control zone being provided with a conduit (27) for introducing an oxygen-containing gas and a conduit (28) for evacuating gas.

22. A vessel according to one of claims 18 to 21, **characterized in that** at least one conduit (5) for evacuating gas from a combustion zone is connected to at least one conduit (7) for introducing oxygen-containing gas into the next zone.

23. A vessel according to any one of claims 18 to 22, **characterized in that** the conduit (28, 9) for evacuating gas from the monitoring and control zone (FC) is connected to a conduit (4) for introducing oxygen-containing gas into the first combustion zone (Z1) to recycle at least a portion of the gas from the monitoring and control zone (FC) to the zone (Z1).
